# EUROPÄISCHE PATENTSCHRIFT

(11) **EP 0 834 257 B1**
(45) Veröffentlichungstag und Bekanntmachung des Hinweises auf die Patenterteilung: **02.10.2002**
(21) Anmeldenummer: 97116983.4
(22) Anmeldetag: 30.09.1997
(51) Int. Cl.: A23G 3/20, A23G 3/26, A23B 7/16

(54) **Verfahren zum Aufbringen einer Schutzschicht auf eine Oberfläche eines Lebensmittel-Produkts**
Coating process to bring a protecting layer on food product surface
Procédé d'enrobage protecteur en surface d'un produit alimentaire

(30) Priorität: 30.09.1996 DE 19640378
(43) Veröffentlichungstag der Anmeldung: 08.04.1998
(73) Patentinhaber: Bahlsen GmbH & Co. KG, 30163 Hannover (DE)
(72) Erfinder: Bretschneider, Uwe, Dr., 30659 Hannover (DE); Wagner, Klaus-Jürgen, 80993 München (DE)
(74) Vertreter: Weber, Joachim, Dr.

(56) Entgegenhaltungen:
- EP-A- 0 611 563
- WO-A-95/34224
- DE-A- 2 323 853
- DE-B- 1 271 524
- DE-C- 486 986
- FR-A- 2 003 045
- FR-A- 2 368 890
- US-A- 1 540 791
- US-A- 2 726 959
- US-A- 2 821 957
- US-A- 3 536 034
- US-A- 3 653 924
- US-A- 3 839 987
- US-A- 4 032 667

## Beschreibung

Die Erfindung bezieht sich auf ein Verfahren zum Aufbringen einer Schutzschicht auf eine Oberfläche eines Lebensmittel-Produkts, insbesondere eines mit einer Schokoladenschicht oder Fettglasur überzogenen Backwarenprodukts oder eines aus Schokolade gefertigten Produkts.

Lebensmittel-Produkte mit einer aus Schokolade oder Fettglasur bestehenden Oberfläche sind in unterschiedlichsten Ausgestaltungsformen bekannt, beispielsweise in Form von Backwaren, wie etwa Keksen, Gebäcken, Waffeln oder ähnlichem mit Schokolade/Fettglasur. Das bei dieser Art von Produkten auftretende Problem besteht darin, daß die Schokoladen-Oberfläche mit zunehmender Temperatur an Stabilität und Griffestigkeit verliert. Der hierbei kritische Temperaturbereich liegt zwischen 28 und 35°C. Die Produkte können bei diesen Temperaturen miteinander verschmelzen, so daß die einzelnen Produkte innerhalb einer Packung in nicht erwünschter Weise aneinander heften. Weiterhin besteht die Gefahr, daß bei der Handhabung und dem Verzehr derartiger Produkte Schokolade auf Hände und/oder Kleidung des Konsumenten übertragen wird.

Die WO 93/19615 beschreibt die Verwendung eines Films zur Versiegelung der Oberfläche von Schokoladen-Produkten sowie unterschiedliche Verfahren zum Aufbringen einer derartigen Schutzschicht. Es wird dabei vorgeschlagen, die Schutzschicht durch Sprühen, Bepinseln oder durch Tauchen der Produkte auf letztere aufzubringen. Diese Vorgehensweisen sind in der Praxis nicht anwendbar, da die Dicke der Schutzschicht nicht in zuverlässiger Weise bestimmt werden kann und da die Produkte hierdurch ein qualitativ nicht ausreichendes Oberflächen-Erscheinungsbild aufweisen.

Der Erfindung liegt die Aufgabe zugrunde, ein Verfahren der eingangs genannten Art zu schaffen, welches bei einfacher Ausgestaltung und industrieller Einsetzbarkeit eine zuverlässige Aufbringung einer Schutzschicht auf ein Lebensmittel-Produkt ermöglicht.

Erfindungsgemäß wird die Aufgabe durch ein Verfahren mit folgenden Arbeitsschritten gelöst:
Verfahren zum Aufbringen einer Schutzschicht auf eine Oberfläche eines Lebensmittel-Produkts mit einer Oberfläche aus Schokolade bzw. Fettglasur mit folgenden Arbeitsschritten:
   - Herstellen einer wässrigen Lösung mit einem filmbildenden Wirkstoff,
   - Aufbringen der Lösung auf eine Wandung einer Vorrichtung zur Bearbeitung des Produkts,
   - gekennzeichnet durch
   - zumindest teilweises Fixieren der Lösung auf der Wandung,
   - Übertragen der zumindest teilweise fixierten Lösung auf die Oberfläche des Produkts durch Kontaktieren der Wandung mit dem Produkt zu einem Zeitpunkt, an dem die Schokolade oder Fettglasur noch nicht oder teilweise kristallisiert ist, zur Vorbereitung der Ausbildung der Schutzschicht durch die Wechselwirkung zwischen der Oberfläche des Produkts und der Lösung,
   - Entfernen des Produkts von der Wandung, und
   - Trocknen der Oberfläche des Produkts.

Das erfindungsgemäße Verfahren zeichnet sich durch eine Reihe erheblicher Vorteile aus. Durch die Aufbringung einer Schicht der Lösung auf der Wandung einer Vorrichtung kann die Dicke der Schutzschicht exakt vorbestimmt werden, sie ist unabhängig von der speziellen Ausgestaltung und Formgebung der Oberfläche des Produkts. Hierdurch wird sichergestellt, daß stets eine gleichbleibende Dicke der Schutzschicht erzeugt wird.

Erfindungsgemäß kann somit eine dünne, durchsichtige und thermisch stabile Schutzschicht auf der Oberfläche des Lebensmittel-Produkts, beispielsweise einer Schokoladen-Oberfläche aufgebracht werden.

Ein weiterer Vorteil des erfindungsgemäßen Verfahrens besteht darin, daß dieses für unterschiedliche Rezepturen von Schutzschichten bzw. Überzugslösungen anwendbar ist. Typische, getestete Rezepturen für derartige Schutzschichten können wie folgt zusammengesetzt sein:
- Rezeptur 1:: Trockenglucosesirup, Lecithin, Wasser.
- Rezeptur 2:: Trockenglucosesirup, Staubzucker, Lecithin, Wasser.
- Rezeptur 3:: Trockenglucosesirup, sprühgetrocknetes Trockeneiweiß, Lecithin, Wasser.
- Rezeptur 4:: Trockenglucosesirup, fraktioniertes Palmöl, Lecimulthin, Wasser.
- Rezeptur 5:: Trockenglucosesirup, Sojaprotein, fraktioniertes Palmöl, Lecithin.

In günstiger Weiterbildung der Erfindung ist vorgesehen, daß die Lösung durch Dispergieren in einem Intensivmischer hergestellt wird. Bevorzugterweise beträgt die Dauer des Dispergiervorganges zwischen drei und fünf Minuten. Die Lösung hat vor der weiteren Verarbeitung bevorzugterweise eine Temperatur zwischen 18 und 20°C.

Unter Verwendung des erfindungsgemäßen Verfahrens ergeben sich somit, bezogen auf das Produkt, zwei wesentliche, nacheinander ablaufende Verfahrensschritte: in dem ersten dieser Verfahrensschritte erfolgt ein vollständiges und gleichmäßiges Benetzen oder Übertragen der Lösungsschicht auf die Oberfläche des Produkts. In dem zweiten Verfahrensschritt wird die Schutzschicht oder Überzugsschicht getrocknet. Da diese beiden Schritte unabhängig voneinander ablaufen und der Übertragungsvorgang und der Trocknungsvorgang sowohl aparativ als auch räumlich voneinander getrennt sind, erfolgt keine gegenseitige Beeinflussung, die den Verfahrensablauf stören könnte.

Es versteht sich, daß das erfindungsgemäße Verfahren nicht auf die oben beschriebenen Rezepturen beschränkt ist, vielmehr können eine Vielzahl von dünnen, durchsichtigen, vorzugsweise im Bereich zwischen 20 und 40°C temperaturunempfindlichen Schutzschichten auf der Basis von Stärke und/oder Stärkeabbauprodukten und/oder Proteinen zur Anwendung kommen. Stoffliche Hauptbestandteile dieser Schutzschichten sind gut filmbildende Stärken und/oder Proteine und/oder aus diesen hergestellte Spezialprodukte, beispielsweise Abbauprodukte, modifizierte Produkte, Maltodextrine, Glucosesirupe etc. Weitere Bestandteile können Fette, Wachse, oberflächenaktive Stoffe, beispielsweise Reinlecithin sein.

Bei der Herstellung der wässrigen Lösung sind erfindungsgemäß eine Vielzahl von Varianten möglich, so kann insbesondere der Trockensubstanzgehalt in Abhängigkeit von der Auswahl der einzelnen Bestandteile und dem Aufbringungsverfahren auf die Wandung der Vorrichtung variiert werden. Beispielsweise kann der Trockensubstanzgehalt zwischen 10 und 50 % liegen. Dabei sind insbesondere Rezepturen vorteilhaft, die einen hohen Trockensubstanzgehalt, eine geringe Viskosität bei 20°C und gute Trocknungseigenschaften aufweisen. Diese Eigenschaften werden beispielsweise durch niedrige viskose Lösungen aus Waxy-Mais-Stärke sowie daraus hergestellten Glucosesirupen und/oder Maltodextrinen erreicht. Zur Senkung der Grenzflächenspannung kann ein oberflächenaktiver Stoff, beispielsweise Lecithin zugesetzt werden. Wesentlich bei der Auswahl der geeigneten Rezeptur ist, daß diese nach dem Trocknen dauerhaft durchsichtig bleibt und eine gute und dauerhafte Verbindung zur Oberfläche des Lebensmittel-Produkts, beispielsweise zur Schokoladen-Oberfläche aufweist.

In einer günstigen Ausgestaltung ist das erfindungsgemäße Verfahren so ausgebildet, daß die Vorrichtung, auf deren Wandung die Lösung aufgebracht wird, ein Förderband umfaßt, dessen Oberfläche mit der Lösung beschichtet wird und auf welches dann das Produkt aufgelegt wird. Die Schichtdicke der Lösung kann beispielsweise zwischen 20 und 40µm betragen. Die Aufbringung kann mittels eines Sprühsystems erfolgen, alternativ hierzu ist auch das Auftragen mittels einer Walze, mittels einer Schaumgummiwalze, über Streichbürsten oder ähnliches möglich.

Auf die so beschichtete Oberfläche des Förderbandes, nachdem diese zumindest teilweise fixiert oder getrocknet ist, ein Keksprodukt aufgelegt, welches vorher durch eine Schokoladen-Überziehanlage geleitet wurde, in welcher der Boden des Keksprodukts mit Schokolade überzogen wurde. Das Produkt wird nachfolgend mit der noch flüssigen Schokolade auf das Förderband aufgelegt und durchläuft eine erste Kühlung, beispielsweise bei einer Lufttemperatur von 18°C. Während dieser Kühlung erfolgt eine Kristallisation der Schokolade, wodurch sich eine feste Verbindung zwischen der Schokolade und der Schutzschicht ausbildet. Zugleich zu der Kristallisation der Schokolade erfolgt ein zumindest teilweises Trocknen der Schutzschicht. Nachfolgend wird das Keksprodukt von dem Förderband abgenommen und einem nachfolgenden Trockner übergeben. Hier erfolgt während einer Verweildauer von beispielsweise 5 Minuten die Endtrocknung der Schutzschicht, vorzugsweise bei einer durchschnittlichen Lufttemperatur von 20°C.

In einer Variante des erfindungsgemäßen Verfahrens kann die Vorrichtung eine Form umfassen, in welche nach dem Aufbringen der Schutzschicht-Lösung flüssige Schokolade eingebracht bzw. ein mit flüssiger Schokolade vollständig oder teilweise überzogenes Produkt eingesetzt wird. Somit können beliebige Formkörper mit unterschiedlichster Oberflächengeometrie unter Verwendung des erfindungsgemäßen Verfahrens mit einer Schutzschicht überzogen werden. Nach dem Einbringen der Schokolade in die Form kristallisiert diese in der Form aus, wodurch sich eine gute und gleichmäßige Verbindung mit der in der Form befindlichen Schutzschicht ergibt. Nach Abschluß der Kühlung werden die auskristallisierten Schokoladen-Stükke aus der Form entnommen und in dem nachfolgenden Verfahrensschritt getrocknet.

Eine weitere Verfahrens-Variante sieht vor, daß die Schutzschicht-Lösung auf eine innere Oberfläche einer rotierbaren Trommel aufgebracht wird. In diese Trommel wird dann nach einer zumindest teilweisen Fixierung der Lösung eines oder mehrerer Produkte eingebracht. Durch die Drehung der Trommel erfolgt eine Übertragung der Schutzschicht auf die Oberfläche des Produkts. Die Verweildauer der Produkte in der Trommel beträgt beispielsweise 90 bis 180 Sekunden, bei einer Trommeldrehzahl von beispielsweise 4 U/min. Die Trommel wird kontinuierlich befüllt. Nach dem Verlassen der Trommel werden die Produkte erfindungsgemäß getrocknet, wobei hierfür beispielsweise ein Spiraltrockner eingesetzt werden kann. Die Trockenzeit beträgt beispielsweise 15 Minuten bei 20° Lufttemperatur und einer Luftfeuchte von vorzugsweise 20% bis 30% relativer Luftfeuchte.

Zusammenfassend ist somit folgendes festzustellen:

Die Erfindung bezieht sich auf ein Verfahren zum Aufbringen einer Schutzschicht auf eine Oberfläche eines Lebensmittel-Produkts mit folgenden Arbeitsschritten:
- Herstellen einer wässrigen Lösung mit einem filmbildenden Wirkstoff,
- Aufbringen der Lösung auf eine Wandung einer Vorrichtung zur Bearbeitung des Produkts,
- Zumindest teilweises Fixieren der Lösung auf der Wandung,
- Übertragen der zumindest teilweise fixierten Lösung auf die Oberfläche des Produkts durch Kontaktieren der Wandung mit dem Produkt,
- Entfernen des Produkts von der Wandung, und
- Trocknung der Oberfläche des Produkts.

## Patentansprüche

1. Verfahren zum Aufbringen einer Schutzschicht auf eine Oberfläche eines Lebensmittel-Produkts mit einer Oberfläche aus Schokolade bzw. Fettglasur mit folgenden Arbeitsschritten:
- Herstellen einer wässrigen Lösung mit einem filmbildenden Wirkstoff,
- Aufbringen der Lösung auf eine Wandung einer Vorrichtung zur Bearbeitung des Produkts,
- **gekennzeichnet durch**
- zumindest teilweises Fixieren der Lösung auf der Wandung,
- Übertragen der zumindest teilweise fixierten Lösung auf die Oberfläche des Produkts **durch** Kontaktieren der Wandung mit dem Produkt zu einem Zeitpunkt, an dem die Schokolade oder Fettglasur noch nicht oder teilweise kristallisiert ist, zur Vorbereitung der Ausbildung der Schutzschicht **durch** die Wechselwirkung zwischen der Oberfläche des Produkts und der Lösung,
- Entfernen des Produkts von der Wandung, und
- Trocknen der Oberfläche des Produkts.

2. Verfahren nach Anspruch 1, **dadurch gekennzeichnet, daß** die wässrige Lösung durch Dispergieren in einem Mischer hergestellt wird.

3. Verfahren nach Anspruch 1 oder 2, **dadurch gekennzeichnet, daß** die wässrige Lösung vor dem Aufbringen auf die Wandung eine Temperatur von 18 bis 20°C aufweist.

4. Verfahren nach einem der Ansprüche 1 bis 3, **dadurch gekennzeichnet, daß** die Vorrichtung ein Förderband umfaßt, auf dessen Oberfläche die Lösung aufgebracht wird und auf welche dann das Produkt aufgelegt wird.

5. Verfahren nach Anspruch 4, **dadurch gekennzeichnet, daß** die Lösung mittels eines Sprühvorgangs auf das Förderband aufgebracht wird.

6. Verfahren nach Anspruch 4, **dadurch gekennzeichnet, daß** die Lösung mittels einer Walze auf das Förderband aufgebracht wird.

7. Verfahren nach Anspruch 4, **dadurch gekennzeichnet, daß** die Lösung mittels Streichbürsten auf das Förderband aufgebracht wird.

8. Verfahren nach einem der Ansprüche 1 bis 3, **dadurch gekennzeichnet, daß** die Vorrichtung eine rotierbare Trommel umfaßt, auf deren innere Oberfläche die Lösung aufgebracht wird und in welche dann das Produkt eingebracht wird.

9. Verfahren nach Anspruch 8, **dadurch gekennzeichnet, daß** die Lösung direkt auf die innere Oberfläche der rotierenden Trommel aufgebracht wird.

10. Verfahren nach einem der Ansprüche 1 bis 3, **dadurch gekennzeichnet, daß** die Vorrichtung eine Form umfaßt, auf deren Fläche die Lösung aufgebracht wird und in welche dann das Produkt eingebracht wird.

11. Verfahren nach einem der Ansprüche 1 bis 10, **dadurch gekennzeichnet, daß** das Produkt eine zumindest teilweise aus Schokolade bestehende Oberfläche aufweist, welche mit der Schutzschicht versehen wird.

## Claims

1. A process for the application of a protective layer to a surface of a food product having a surface made of chocolate or fatty icing, having the following operating steps:
- production of an aqueous solution with a film-forming active ingredient,
- application of the solution to a wall of a device for processing the product
- **characterised by**
- at least partial fixing of the solution on the wall,
- transfer of the at least partially fixed solution onto the surface of the product by bonding the wall with the product at an instant at which the chocolate or fatty icing is not yet or is only partially crystallised, for the preparation of the formation of the protective layer by interaction between the surface of the product and the solution,
- removal of the product from the wall, and
- drying of the surface of the product.

2. A process according to Claim 1,
**characterised in that** the aqueous solution is produced by dispersal in a mixer.

3. A process according to Claim 1 or 2,
**characterised in that** the aqueous solution has a temperature of 18 to 20°C prior to the application onto the wall.

4. A process according to one of Claims 1 to 3,
**characterised in that** the device comprises a conveyor belt onto the surface of which the solution is applied and onto which the product is then placed.

5. A process according to Claim 4,
**characterised in that** the solution is applied to the conveyor belt by means of a spray operation.

6. A process according to Claim 4,
**characterised in that** the solution is applied to the conveyor belt by means of a roller.

7. A process according to Claim 4,
**characterised in that** the solution is applied to the conveyor belt by means of brushes.

8. A process according to one of Claims 1 to 3,
**characterised in that** the device comprises a rotatable drum onto the inner surface of which the solution is applied and into which the product is then introduced.

9. A process according to Claim 8,
**characterised in that** the solution is applied directly to the inner surface of the rotating drum.

10. A process according to one of Claims 1 to 3,
**characterised in that** the device comprises a mould onto the surface of which the solution is applied and into which the product is then introduced.

11. A process according to one of Claims 1 to 10,
**characterised in that** the product has a surface which is made at least partially of chocolate and which is provided with the protective layer.

## Revendications

1. Procédé d'application d'un enrobage protecteur en surface d'un produit alimentaire présentant une surface en chocolat ou en glaçage gras, comportant les étapes suivantes :
la production d'une solution aqueuse avec une substance filmogène,
l'application de la solution sur une paroi d'un dispositif de traitement du produit,
**caractérisé par**
la fixation au moins partielle de la solution sur la paroi,
le transfert de la solution au moins partiellement fixée sur la surface du produit par mise en contact de la paroi avec le produit à un instant où le chocolat ou le glaçage gras n'est pas encore cristallisé ou ne l'est que partiellement, pour préparer la formation de l'enrobage protecteur par l'interaction entre la surface du produit et la solution,
l'écartement du produit de la paroi, et
le séchage de la surface du produit.

2. Procédé selon la revendications 1, **caractérisé en ce que** la solution aqueuse est préparée par dispersion dans un mélangeur.

3. Procédé selon la revendication 1 ou 2, **caractérisé en ce que** la solution aqueuse présente une température de 18 à 20°C avant l'application sur la paroi.

4. Procédé selon l'une des revendications 1 à 3, **caractérisé en ce que** le dispositif comporte une bande transporteuse sur la surface de laquelle la solution est appliquée et sur laquelle le produit est ensuite posé.

5. Procédé selon la revendication 4, **caractérisé en ce que** la solution est appliquée sur la bande transporteuse par un processus de pulvérisation.

6. Procédé selon la revendication 4, **caractérisé en ce que** la solution est appliquée sur la bande transporteuse au moyen d'un rouleau.

7. Procédé selon la revendication 4, **caractérisé en ce que** la solution est appliquée sur la bande transporteuse par étalement avec une brosse.

8. Procédé selon l'une des revendications 1 à 3, **caractérisé en ce que** le dispositif comporte un tambour rotatif, sur la surface intérieure duquel la solution est appliquée et dans lequel le produit est ensuite introduit.

9. Procédé selon la revendication 8, **caractérisé en ce que** la solution est appliquée directement sur la surface intérieure du tambour rotatif.

10. Procédé selon l'une des revendications 1 à 3, **caractérisé en ce que** le dispositif comporte un moule sur la surface duquel la solution est appliquée et dans lequel le produit est ensuite introduit.

11. Procédé selon l'une des revendications 1 à 10, **caractérisé en ce que** le produit présente une surface constituée au moins partiellement de chocolat, qui est munie de l'enrobage protecteur.
